# EUROPÄISCHE PATENTANMELDUNG

(11) **EP 1 374 685 A1**
(43) Veröffentlichungstag der Anmeldung: **02.01.2004**
(21) Anmeldenummer: 03012336.8
(22) Anmeldetag: 30.05.2003
(51) Int. Cl.: A21C 9/08, A21C 5/00, A21C 13/02, A21C 7/00

(54) **Vorrichtung und Verfahren zum Bearbeiten von Teig**

(30) Priorität: 21.06.2002 DE 10227739
(71) Anmelder: Werner & Pfleiderer Lebensmitteltechnik GmbH, 91550 Dinkelsbühl (DE)
(72) Erfinder: Fiedler, Rudolf, 91731 Langfurth (DE)
(74) Vertreter: Rau, Albrecht

(57) **Zusammenfassung**

Vorrichtung zur Bearbeitung von Teig mit einem Gehäuse (3), mit einer in dem Gehäuse (3) angeordneten Teigteil-Einrichtung (20) zum Teilen und Anordnen von Teig (18) in Reihen von n Teiglingen (21), wobei n = 1, 2, 3, ..., mit einer in dem Gehäuse (3) angeordneten Umordnungs-Einrichtung (29) zum Umordnen der Teiglinge (21) aus Reihen von n Teiglingen (21) in neue Reihen von m Teiglingen (21), wobei m = 1, 2, 3, ..., und mit mindestens einer der Umordnungs-Einrichtung (29) nachgeordneten Einrichtung (45, 46, 47) zur Bearbeitung der Reihen von m Teiglingen (21).

## Beschreibung

Die Erfindung betrifft eine Vorrichtung zum Bearbeiten von Teig, insbesondere eine Vorrichtung zum Teilen von Teig in Teiglinge und zum anschließenden Gären der Teiglinge sowie ein entsprechendes Verfahren.

Bei bekannten Brötchenanlagen wird in einer Teigteil-Anlage Teig portioniert und in einer vorbestimmten Reihigkeit, z. B. vier Teiglinge in einer Reihe, auf einem Band abgelegt. Die in entsprechenden Reihen angeordneten Teiglinge werden einer zweiten, räumlich getrennten Anlage, nämlich einem Gärschrank, zugeführt. Durch diesen werden die Teiglinge mit derselben Reihigkeit, im Beispiel vier Teiglinge in einer Reihe, geführt. Sollen Teiglinge in einer anderen Reihigkeit, z. B. fünf Teiglinge pro Reihe oder sächsische Doppelstücke, durch den Gärschrank geführt werden, so muss eine andere Teigteil-Anlage verwendet werden.

Der Erfindung liegt die Aufgabe zugrunde, eine Vorrichtung und ein Verfahren zum Bearbeiten von Teig möglichst einfach und flexibel hinsichtlich der Anordnung der transportierten Teiglinge auszugestalten.

Die Aufgabe wird durch die Merkmale des Anspruches 1 gelöst. Der Kern der Erfindung besteht darin, im Prozessablauf zwischen einer Teigteil-Einrichtung und einer im selben Gehäuse angeordneten Gär-Einrichtung eine Umordnungs-Einrichtung vorzusehen, die Reihen von n Teiglingen in Reihen von m Teiglingen umordnet.

Weitere vorteilhafte Ausgestaltungen der Erfindung ergeben sich aus den Unteransprüchen.

Weitere Merkmale und Einzelheiten der Erfindung ergeben sich aus der Beschreibung zweier Ausführungsbeispiele anhand der Zeichnungen. Es zeigen:
- Fig. 1: einen Schnitt durch eine Vorrichtung gemäß dem ersten Ausführungsbeispiel,
- Fig. 2: einen Schnitt gemäß der Schnittlinie II-II in Figur 1 der Vorrichtung in einer ersten Position,
- Fig. 3: einen Schnitt wie Figur 2 der Vorrichtung in einer zweiten Position,
- Fig. 4: eine Draufsicht gemäß dem Sichtpfeil IV in Figur 1,
- Fig. 5: eine Betätigungseinrichtung des V-Transportbandes gemäß Figur 1,
- Fig. 6: einen Schnitt entsprechend Figur 2 der Vorrichtung gemäß einem zweiten Ausführungsbeispiel in einer ersten Position, und
- Fig. 7: einen Schnitt gemäß Figur 6 der Vorrichtung in einer zweiten Position.

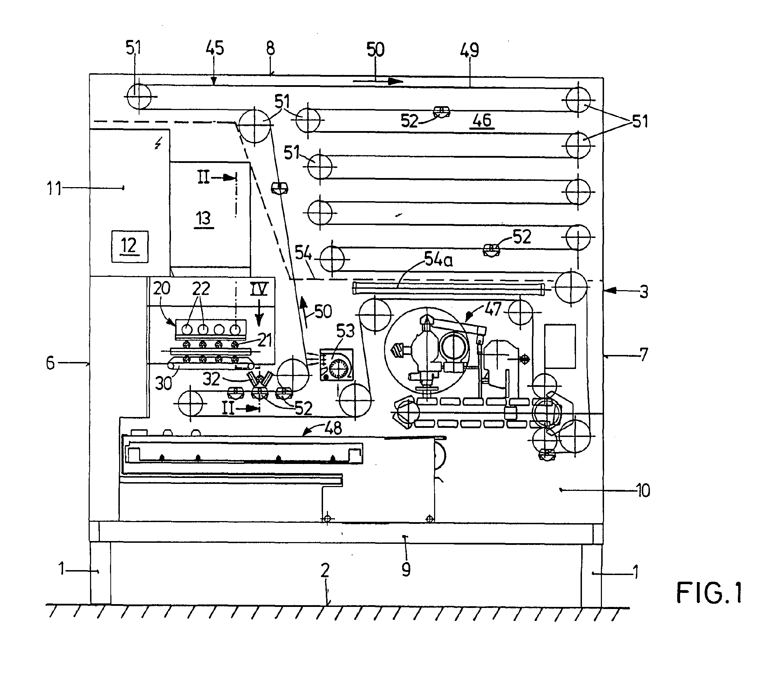

Im Folgenden wird unter Bezugnahme auf die Figuren 1 bis 5 eine erste Ausführungsform der Erfindung beschrieben. Eine Vorrichtung zum Teilen und Gären von Teig, insbesondere eine Brötchenanlage, weist ein über Füße 1 auf einem Maschinenboden 2 abgestütztes, im wesentlichen geschlossenes, rechteckiges Gehäuse 3 auf. Das Gehäuse 3 weist eine vertikale Vorderwand 4, eine parallel zu dieser angeordnete Rückwand 5 sowie zwei mit diesen verbundene, zueinander parallele Seitenwände 6 und 7 auf. Das Gehäuse 3 ist oben verschlossen durch einen horizontalen Gehäusedeckel 8 und weist an seinem unteren Ende einen stabilen Gehäuseboden 9 auf. In der in Figur 1 linken Hälfte des Innenraumes 10 des Gehäuses 3 ist in mittlerer Höhe benachbart zur Seitenwand 6 eine Steuer-Einrichtung 11 zur Steuerung der Vorrichtung vorgesehen. Die Steuer-Einrichtung 11 weist ein in der Vorderwand 4 angeordnetes Bedienfeld 12 auf. Benachbart zur Steuer-Einrichtung 11 ist eine Teigzuführ-Einrichtung 13 zur Zuführung von Teig von außen zu der Vorrichtung vorgesehen. Die Einrichtung 13 weist eine in der Vorderwand 4 vorgesehene Teigeinfüll-Öffnung 14 auf, an die sich gehäuseinnenseitig ein horizontaler Teigzuführ-Kanal 15 anschließt. Der Kanal 15 weist an seinem Boden ein über die Vorderwand 4 nach außen vorstehendes, über einen Motor 16 angetriebenes, endloses Teigzuführ-Band 17 auf, auf das zuzuführender Teig 18 gelegt wird. Hinter dem innenseitigen Ende des Teigzuführ-Bandes 17 ist unterhalb davon ein sich nach unten verjüngender Teigtrichter 19 angeordnet. Der Abstand A des innenseitigen Endes des Teigzuführ-Bandes 17 von der Vorderwand 4, die Höhe H des Teigzuführ-Kanals 15 zwischen dem Band 17 und der Oberseite des Kanals 15 sowie die Tiefe T des Teigtrichters 19 sind derart gewählt, dass die Hand eines durch die Öffnung 14 geschobenen Armes die Teigteil-Einrichtung 20 unter keinen Umständen erreichen kann. Hierdurch sollen Verletzungen beim Nachfüllen des Teiges, während die Vorrichtung in Betrieb ist, verhindert werden. Hierdurch wird eine Hand-Schutz-Einrichtung gebildet.

Am unteren Ende des Teigtrichters 19 ist eine an sich bekannte Teigteil-Einrichtung 20 zur Erzeugung einzelner, hinsichtlich der Masse vorbestimmter Teiglinge 21 vorgesehen. Die Teigteil-Einrichtung 20 weist n, n = 1, 2, 3 ,... , nebeneinander angeordnete Zylinder 22 auf, in die zugehörige Kolben zusammen mit auf dem Boden 23 des Teigtrichters 19 befindlichem Teig einschiebbar sind. Der genauere Aufbau einer Teigteil-Einrichtung ist aus der DE 101 44 546.6 bekannt. Im vorliegenden Fall ist n = 4, d. h. es sind in einer Reihe vier Zylinder 22 vorgesehen. Unterhalb von Ausgabe-Öffnungen 24 der Zylinder 22 befindet sich ein endloses, angetriebenes in eine Förder-Richtung 25 förderndes Teiglings-Transportband 26. Oberhalb des Transportbandes 26 und der Teigteil-Einrichtung 20 in Transport-Richtung 25 nachgeordnet ist erst ein Mehlstreuer 27 zum Bemehlen der Teiglinge 21 und dann ein Rundwirker 28 zum Rundwirken der Teiglinge 21 vorgesehen.

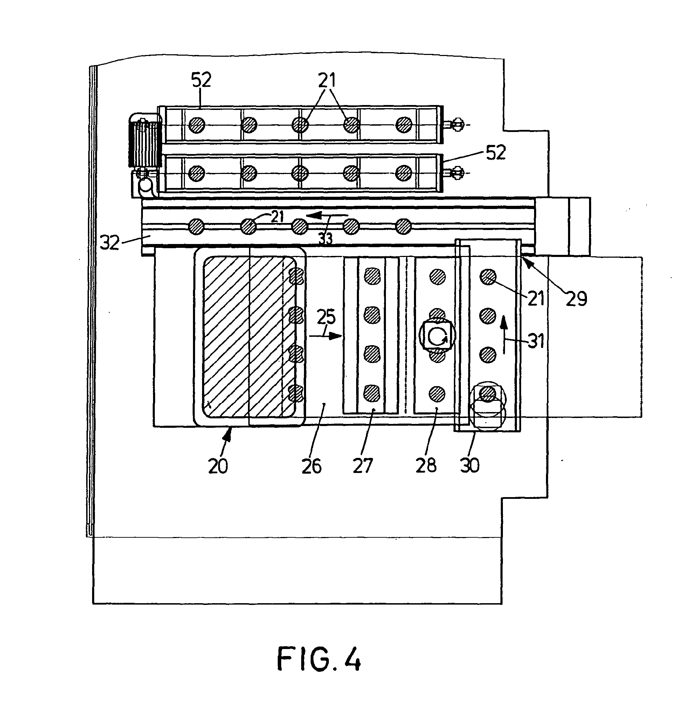

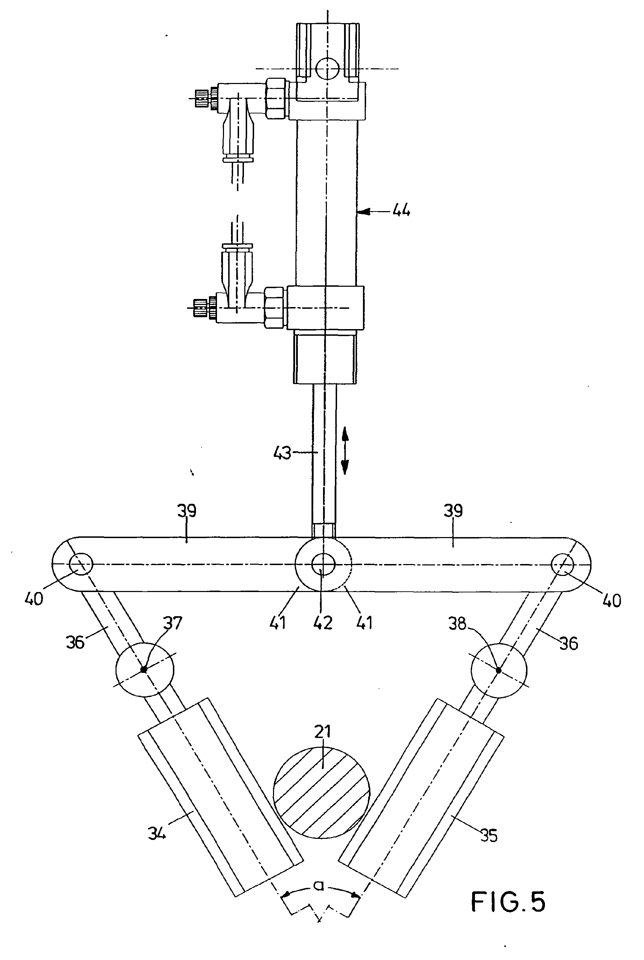

Dem Transportband 26 nachgeordnet ist eine Umordnungs-Einrichtung 29 zum Umordnen der Teiglinge 21 aus einer Reihe von n Teiglingen in eine Reihe von m Teiglingen vorgesehen, wobei m = 1, 2, 3, .... Die Größen n und m können voneinander verschieden sein, müssen es aber nicht. Die Umordnungs-Einrichtung 29 weist ein in Förder-Richtung 25 unmittelbar hinter dem und unterhalb des Transportbandes 26 angeordnetes, endloses, angetriebenes, rinnenförmiges Förderband 30 mit einer Förder-Richtung 31 auf. Das Förderband 30 ist derart angeordnet, dass eine automatische Übergabe der Teiglinge 21 von dem Transportband 26 auf das Förderband 30 erfolgen kann. Durch die rinnenförmige Ausgestaltung des Förderbandes 30 wird erreicht, dass die Teiglinge 21 in der Mitte des Förderbandes 30 zu liegen kommen. Das Förderband 30 erstreckt sich entlang der Richtung 31 mindestens über die gesamte Breite des Transportbandes 26. Die Förderrichtung 31 des Förderbandes 30 verläuft senkrecht zur Förderrichtung 25 des Teiglings-Transportbandes 26. Die Umordnungs-Einrichtung 29 weist des weiteren ein V-Transportband 32 auf, das unterhalb und unmittelbar hinter dem Förderband 30 und parallel zu dem Teiglings-Transportband 26 angeordnet ist. Das V-Transportband 32 weist eine Förder-Richtung 33 auf, die senkrecht zu der Förder-Richtung 31 verläuft und der Förder-Richtung 25 entgegengesetzt ist. Das in Figur 4 rechte Ende des V-Transportbandes 32 befindet sich unmittelbar hinter und unterhalb des in Förder-Richtung 31 gelegenen Endes des Förderbandes 30, sodass eine automatische Übergabe von Teiglingen 21 von dem Förderband 30 auf das V-Transportband 32 möglich ist. Das V-Transportband 32 weist zwei auf den Schenkeln eines V angeordnete, endlose, angetriebene Transport-Bänder 34, 35 auf, die in der in Figur 5 dargestellten Schließstellung einen Winkel a einschließen, für den gilt: 40° ≤ a ≤ 80°, insbesondere a ≅ 60°. Die Transport-Bänder 34 und 35 weisen an ihrem oberen Ende jeweils einen Träger 36 auf, der um die Schwenkachse 37 bzw. 38 verschwenkbar ist. Die Schwenkachsen 37 und 38 verlaufen parallel zur Förder-Richtung 33 des V-Transportbandes 32. An den oberen Enden der Träger 36 ist jeweils ein Arm 39 über ein Gelenk 40 angelenkt, wobei die einander zugewandten Enden 41 der Arme 39 über ein Gelenk 42 an einer verschiebbaren Kolbenstange 43 einer pneumatischen Kolben-Zylinder-Einheit 44 angelenkt sind. Diese Bewegung kann auch elektrisch, z. B. über Nocken gelöst werden.

In dem Gehäuse 3 ist ferner eine Teiglings-Transport-Einrichtung 45 zum Transport der Teiglinge 21 vom Bereich des V-Transportbandes 32 zu einer und durch eine Gär-Einrichtung 46, anschließend zu einer Teiglings-Bearbeitungs-Einrichtung 47 sowie anschließend zu einer Teiglings-Ausgabe-Einrichtung 48 vorgesehen. Die Teiglings-Transport-Einrichtung 45 weist zwei endlose, parallel zueinander verlaufende, entlang einer Förder-Richtung 50 angetriebene Kettenstränge 49 auf. Die Kettenstränge 49 sind über entsprechende Zahnräder 51 umgelenkt. Zwischen den beiden Kettensträngen 49 sind über die gesamte Länge der Kettenstränge 49 gleichmäßig verteilt Gärgutträger 52 zur Aufnahme der Teiglinge 21 befestigt, von denen in Figur 1 nur einige dargestellt sind. Die Gärgutträger 52 sind unmittelbar unterhalb des V-Transportbandes 32 senkrecht zur Förder-Richtung 33 vorbeigeführt. Anschließend erfolgt eine Umlenkung der Gärgutträger 52 nach oben vorbei an einer Einrichtung 53 zur Trocknung der Gärgutträger 52, die ein Heißluftgebläse aufweist. Anschließend werden die Kettenstränge 49 der Gär-Einrichtung 46 zugeführt, die durch die in Figur 1 strichliert dargestellte Linie 54 ungefähr begrenzt ist. Eine physikalische Abtrennung der Gär-Einrichtung 46 von den anderen im Gehäuse 3 angeordneten Einrichtungen erfolgt nicht. In der Gär-Einrichtung 46 sind die Kettenstränge 49 von oben nach unten mäanderförmig durchgeführt, sodass ein möglichst langes Verweilen der Teiglinge 21 in der Gär-Einrichtung 46 erfolgt. Die Gär-Einrichtung 46 ist nach unten durch ein Trenn-Element 54a gegenüber der Teiglings-Bearbeitungs-Einrichtung 47 begrenzt. Bei der Teiglings-Bearbeitungs-Einrichtung 47 handelt es sich um eine bekannte Einrichtung zum Entleeren der Gärgutträger 52 mit nachfolgendem Stanzen, Schneiden, Drücken und Nachwirken der Teiglinge 21. Die Teiglings-Bearbeitungs-Einrichtung 47 weist ein Teiglings-Transport-Band 56 auf, das die fertig bearbeiteten Teiglinge 21 an eine dieser nachgeordnete Teiglings-Ausgabe-Einrichtung 48 übergibt. Die Teiglings-Ausgabe-Einrichtung 48 weist eine in der Vorderwand 4 angeordnete, unter der Teigeinfüll-Öffnung 14 befindliche Teiglings-Ausgabe-Öffnung 57 auf. Durch die Öffnung 57 können die Teiglinge 21 entweder automatisch über ein Transportband abtransportiert oder von Hand entnommen werden.

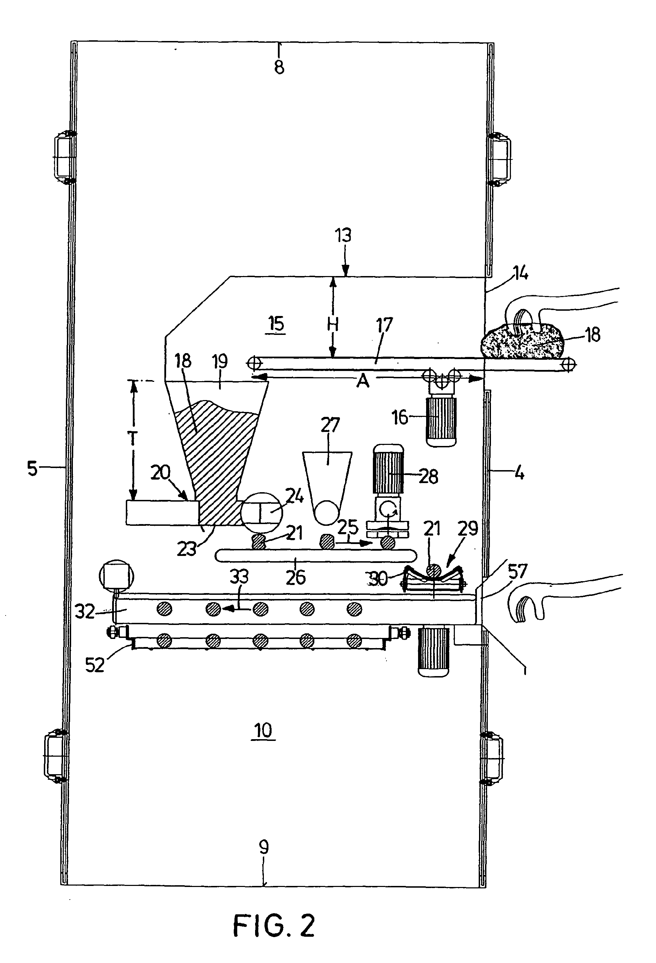

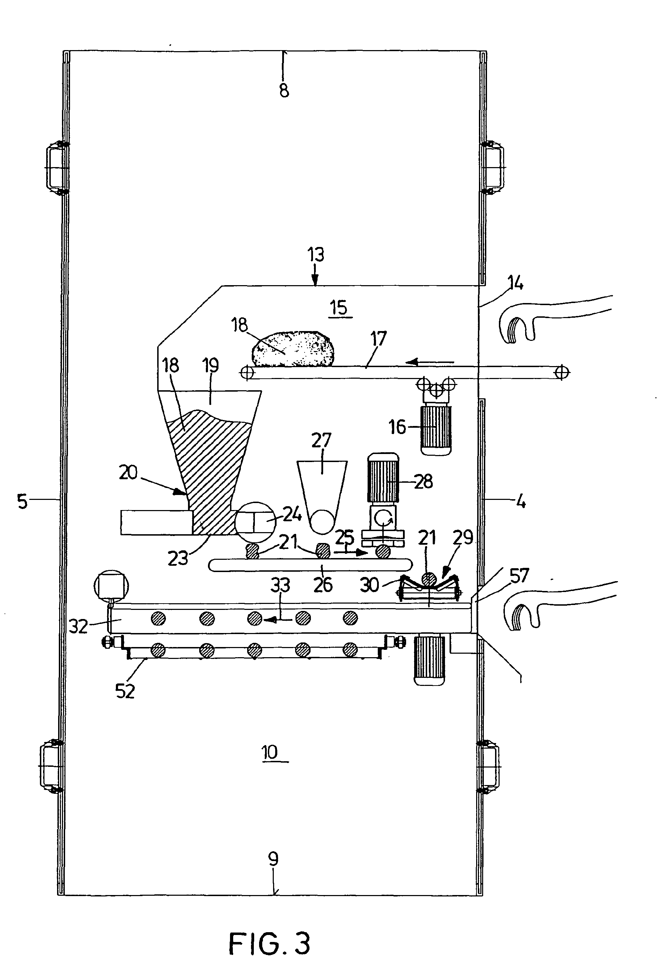

Im Folgenden wird die Funktionsweise der Vorrichtung gemäß dem ersten Ausführungsbeispiel beschrieben. Zu Beginn wird, wie in Figur 2 dargestellt, ein Teigklumpen von einer Bedienperson von außen auf das Teigzuführ-Band 17 gelegt. Das Teigzuführ-Band 17 fördert den Teig 18, wie in Figur 3 dargestellt, durch den Teigzuführ-Kanal 15. Am Ende des Teigzuführ-Bandes 17 fällt der Teig 18 in den Teigtrichter 19. Der Weg des Teiges 18 ist somit L-förmig. Die Höhe H, der Abstand A und die Tiefe T sind derart gewählt, dass eine menschliche Hand von außen nicht bis zur Teigteil-Einrichtung 20 gelangen kann. Hierdurch sollen Verletzungen beim Nachfüllen des Teiges während des Betriebes der Vorrichtung verhindert werden. Hieraus ergibt sich der Vorteil, dass auch bei dem Betrieb der Teigteil-Einrichtung 20 und der sonstigen Vorrichtung kontinuierlich Teig nachgefüllt werden kann, ohne dass ein Abschalten mit den entsprechenden Standzeiten erforderlich ist. Gemäß einer bevorzugten Ausführungsform beträgt der Abstand des Teigzuführ-Bandes 17 vom Boden 1800 mm. Die Höhe H beträgt 275 mm. Die Tiefe T beträgt 420 mm und der Abstand A beträgt 360 mm. Anschließend wird der Teig durch die Teigteil-Einrichtung 20 in entsprechende Zylinder 22 gedrückt und auf diese Weise portioniert. Die einzelnen Teigportionen, die Teiglinge 21, fallen in einer Reihe aus der Ausgabe-Öffnung 24 der Teigteil-Einrichtung 20 auf das Teiglings-Transportband 26. Es liegen jeweils n Teiglinge in einer Reihe, wobei im vorliegenden Fall n = 4 ist. Es ist auch möglich, nicht alle Zylinder 22 aktiv zu betreiben. So kann die Anlage z. B. bei reduzierter Kapazität oder bei der Schadhaftigkeit eines Zylinders 22 nur mit drei, zwei oder einem Zylinder betrieben werden. Die Reihe von Teiglingen 21 wird anschließend durch den Mehlstreuer 27 bemehlt und durch den Rundwirker 28 rund gewirkt. Das Teiglings-Transportband 26 übergibt jeweils eine Reihe von n = 4 Teiglingen 21 auf das rinnenförmige Förderband 30. Hierdurch wird die n-Reihigkeit der Teiglinge 21 auf dem Teiglings-Transportband 26 aufgehoben und eine endlose Folge von Teiglingen 21 auf dem Förderband 30 erzeugt. Die Teiglinge 21 auf dem Förderband 30 werden entlang der Förder-Richtung 31 um 90° versetzt zur Förder-Richtung 25 seitlich abgefördert. Die Teiglinge 21 auf dem Förderband 30 werden auf das sich in Förder-Richtung 33 bewegende V-Transportband 32 übergeben. Dort wird eine Reihe von m Teiglingen erzeugt; im vorliegenden Fall ist m = 5. Durch die zeitliche Steuerung des V-Transportbandes 32 lässt sich der Abstand der einzelnen Teiglinge 21 auf dem V-Transportband 32 verändern. So können dort mehr oder weniger Teiglinge pro Reihe angeordnet werden, als sie durch die Teigteil-Einrichtung 20 erzeugt wurden. Es ist darüber hinaus möglich, jeweils zwei Teiglinge 21 im unmittelbaren Kontakt zueinander anzuordnen und dann im Abstand zu diesen wieder ein Paar von in Kontakt stehenden Teiglingen anzuordnen. Hierdurch lassen sich beispielsweise sogenannte Doppelstücke, Mehrfachstücke oder Stangengebäck automatisch herstellen. Durch die Umordnungs-Einrichtung 29 ist es möglich, unabhängig von der Zahl der aktiven Zylinder 22 der Teigteil-Einrichtung 20 eine beliebige Bestückung der Gärgutträger 52 zu erreichen. Durch ein Öffnen des V-Transportbandes 32 gelangen die Teiglinge 21 in einer Reihe von m Stück - im vorliegenden Fall m = 5 - in den Gärgutträger 52. Zum Öffnen wird die Kolbenstange 43 durch die Kolben-Zylinder-Einheit 44 nach oben verschoben, wodurch sich die Transportbänder 34 und 35 um die Schwenkachsen 37 bzw. 38 verschwenken und ein Herausfallen der Teiglinge 21 nach unten ermöglichen. Danach wird das V-Transportband 32 wieder geschlossen. Im Anschluss daran werden die mit Teiglingen 21 belegten Gärgutträger 52 in Figur 1 nach links oben transportiert und von dort von oben nach unten mäanderförmig durch die Gär-Einrichtung 46 befördert. Die an sich bekannte Gär-Einrichtung 46 weist Einrichtungen zur Einstellung der Temperatur und der Luftfeuchtigkeit auf, sodass ein optimales Gären der Teiglinge 21 möglich ist. Anschließend werden die Teiglinge 21 der Teiglings-Bearbeitungs-Einrichtung 47 zugeführt, wo sie aus den Gärgutträgern 52 entfernt, bei Bedarf z. B. durch Stanz-, Schneide-, Druck- und Nachwirk-Element nachbearbeitet werden, und anschließend der Teiglings-Ausgabe-Einrichtung 48 zugeführt werden.

Vorteilhaft an der gesamten Vorrichtung ist, dass eine Teigteil-Einrichtung einerseits und eine Gär-Einrichtung mit nachgeordneter Teiglings-Bearbeitungs-Einrichtung andererseits in einem einzigen Gehäuse 3 mit einer einzigen Teigzuführ-Öffnung 14 und einer einzigen Teiglings-Ausgabe-Öffnung 57 geschaffen wird. Hierdurch wird eine Reihe von Elementen eingespart, die erforderlich sind, wenn das Teilen des Teiges sowie das Gären und Nachbearbeiten des Teiges in zwei verschiedenen Anlagen erfolgt. Ermöglicht wird dies auch durch die im Bereich der Teigzuführ-Öffnung vorgesehene Hand-Schutz-Einrichtung, die sicherstellt, dass auch bei Betrieb der Vorrichtung einschließlich der Teigteil-Einrichtung 20 Hände des Bedienpersonals nicht in Berührung kommen können mit den Werkzeugen der Teigteil-Einrichtung 20.

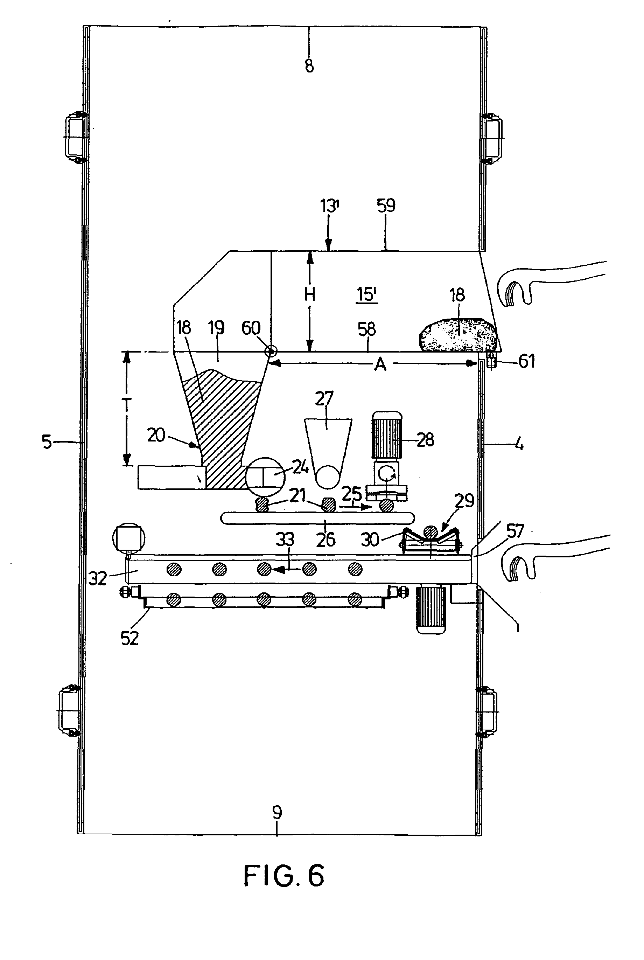

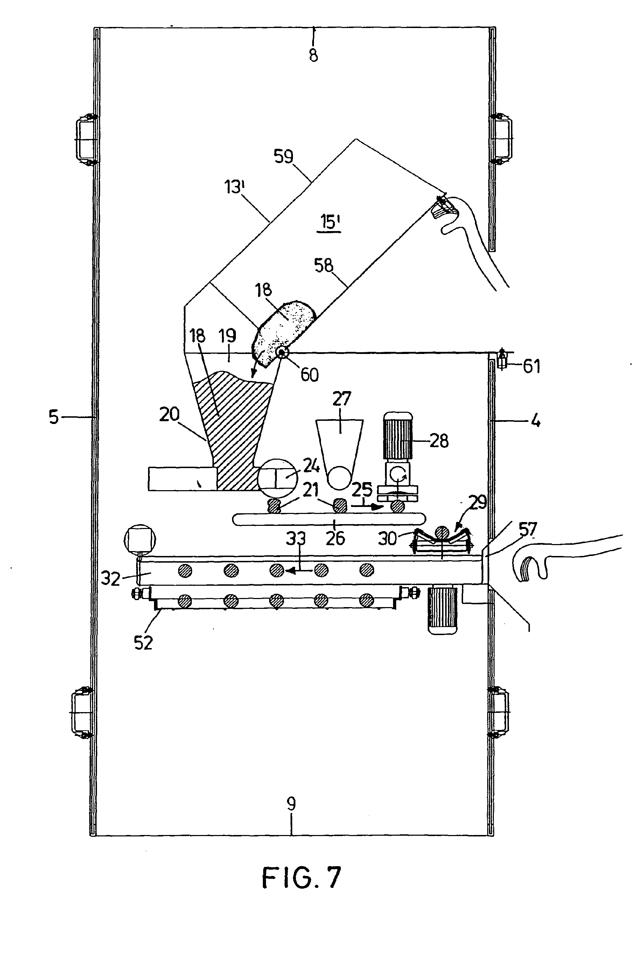

Im Folgenden wird unter Bezugnahme auf die Figuren 6 und 7 und eine zweite Ausführungsform der Erfindung beschrieben. Konstruktiv identische Teile erhalten dieselben Bezugszeichen, wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem hochgesetzten Strich. Der wesentliche Unterschied gegenüber dem ersten Ausführungsbeispiel besteht in der Ausgestaltung der Teigzuführ-Einrichtung 13' sowie der zugehörigen Hand-Schutz-Einrichtung. Der Teigzuführ-Kanal 15' wird begrenzt durch eine Bodenplatte 58, eine Deckplatte 59 sowie diese verbindende Seitenplatten. Die Bodenplatte 58 ist an ihrem innenseitigen Ende an einem Gelenk 60 verschwenkbar angelenkt. Am außenseitigen Ende der Bodenplatte 58 ist ein über die Vorderwand 4 nach außen vorstehender Handgriff 61 vorgesehen. Die Größen H, A und T sind derart aufeinander abgestimmt, dass eine menschliche Hand nicht zu der Teigteil-Einrichtung 20 gelangen kann. Es können jedoch auch andere Hand-Schutz-Einrichtungen vorgesehen sein, die sicherstellen, dass beim Nachfüllen des Teiges während des Betriebes der Vorrichtung eine Verletzung des Bedienpersonals durch die Teigteil-Einrichtung 20 nicht erfolgen kann. Zum Nachfüllen des Teiges 18 wird dieser an das äußere Ende der Bodenplatte 58 gelegt. Anschließend wird die Bodenplatte 58 und somit der Teigzuführ-Kanal 15', wie in Figur 7 dargestellt, nach oben verschwenkt, sodass der Teig 18 in den Teigtrichter 19 rutscht. Diese Form der Teigzuführung hat den Vorteil, dass ein Teigzuführ-Band samt Antrieb, wie bei dem ersten Ausführungsbeispiel, nicht erforderlich ist.

## Patentansprüche

1. Vorrichtung zur Bearbeitung von Teig
a. mit einem Gehäuse (3),
b. mit einer in dem Gehäuse (3) angeordneten Teigteil-Einrichtung (20) zum Teilen und Anordnen von Teig (18) in Reihen von n Teiglingen (21), wobei n = 1, 2, 3, ...,
c. mit einer in dem Gehäuse (3) angeordneten Umordnungs-Einrichtung (29) zum Umordnen der Teiglinge (21) aus Reihen von n Teiglingen (21) in neue Reihen von m Teiglingen (21), wobei m = 1, 2, 3, ..., und
d. mit mindestens einer der Umordnungs-Einrichtung (29) nachgeordneten Einrichtung (45, 46, 47) zur Bearbeitung der Reihen von m Teiglingen (21).

2. Vorrichtung gemäß Anspruch 1, **dadurch gekennzeichnet, dass** die Teigteil-Einrichtung (20) eine erste Förder-Einrichtung (26) mit einer ersten Förder-Richtung (25) zum Transport von Teiglingen in Reihen von n Teiglingen (21) aufweist.

3. Vorrichtung nach Anspruch 2, **dadurch gekennzeichnet, dass** die Umordnungs-Einrichtung (29) eine der ersten Förder-Einrichtung (26) nachgeordnete zweite Förder-Einrichtung (30) mit einer zweiten Förder-Richtung (31) zur Erzeugung einer endlosen Folge von Teiglingen (21) aufweist.

4. Vorrichtung gemäß Anspruch 3, **dadurch gekennzeichnet, dass** die erste Förder-Richtung (25) schräg, insbesondere senkrecht, zur zweiten Förder-Richtung (31) verläuft.

5. Vorrichtung gemäß Anspruch 3, **dadurch gekennzeichnet, dass** die Umordnungs-Einrichtung (29) eine der zweiten Förder-Einrichtung (30) nachgeordnete dritte Förder-Einrichtung (32) mit einer dritten Förder-Richtung (33) zur Erzeugung von Reihen von m Teiglingen (21) aufweist.

6. Vorrichtung gemäß Anspruch 5, **dadurch gekennzeichnet, dass** die erste Förder-Richtung (25) im wesentlichen entgegengesetzt zur dritten Förder-Richtung (33) verläuft.

7. Vorrichtung gemäß Anspruch 5, **dadurch gekennzeichnet, dass** die dritte Förder-Einrichtung (32) zwei gegeneinander verschwenkbare Schenkel (34, 35) zur Übergabe einer Reihe von m Teiglingen (21) an die nachgeordnete Einrichtung (45, 46, 47) zur Bearbeitung der Teiglinge (21) aufweist.

8. Vorrichtung gemäß Anspruch 7, **dadurch gekennzeichnet, dass** eine Steuer-Einrichtung (11) zur Steuerung der Geschwindigkeit der dritten Förder-Einrichtung (32) in Abhängigkeit von der Geschwindigkeit der zweiten Förder-Einrichtung (30) aufweist.

9. Vorrichtung gemäß Anspruch 8, **dadurch gekennzeichnet, dass** eine Teiglings-Transport-Einrichtung (45) zum Transport der Teiglinge (21) von der dritten Förder-Einrichtung (32) zu einer Gär-Einrichtung (46) vorgesehen ist.

10. Verfahren zur Bearbeitung von Teig umfassend die folgenden Schritte:
a) Bereitstellen von Teig (18),
b) Teilen des Teiges (18) in Reihen von n Teiglingen (21), wobei n = 1, 2, 3, ...,
c) Umordnen der Teiglinge (21) aus Reihen von n Teiglingen (21) in neue Reihen von m Teiglingen (21), wobei m = 1, 2, 3 ...,
d) Bearbeiten der in Reihen von m Teiglingen (21) angeordneten Teiglinge (21).
